(19) Europäisches Patentamt

European Patent Office

Office européen des brevets

(11) **EP 0 529 718 B1**

(12) **FASCICULE DE BREVET EUROPEEN**

(45) Date de publication et mention de la délivrance du brevet:
**19.02.1997 Bulletin 1997/08**

(51) Int Cl.[6]: **H03M 13/12**, H04L 27/00, H03M 13/00

(21) Numéro de dépôt: **92202524.2**

(22) Date de dépôt: **18.08.1992**

(54) **Système de transmission de signaux numériques à codes en cascade et récepteur et décodeur mis en oeuvre dans ledit système**

Digitales Nachrichtenübertragungssystem mit verketteten Koden und in diesem System angewandter Empfänger und Dekodierer

Digital signal transmission system using concatenated codes and receiver and decoder used for this system

(84) Etats contractants désignés:
**DE FR GB IT**

(30) Priorité: **21.08.1991 FR 9110482**

(43) Date de publication de la demande:
**03.03.1993 Bulletin 1993/09**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Philips Electronics N.V.**
  **5621 BA Eindhoven (NL)**
  Etats contractants désignés:
  **DE GB IT**

(72) Inventeurs:
- **Fazel, Khaled, Société Civile S.P.I.D.**
  **F-75008 Paris (FR)**
- **Chouly, Antoine, Société Civile S.P.I.D.**
  **F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
**EP-A- 0 413 505**

- **IEEE TRANSACTIONS ON INFORMATION THEORY vol. 35, no. 1, janvier 1989, pages 87-98, Piscataway, US; G. POTTIE et al.: "Multilevel Codes Based on Partitioning"**
- **IEEE TRANSACTIONS ON COMMUNICATIONS vol. 38, no. 8, août 1990, pages 1145-1155, New York, US; D.SARGRAD et al.: "Errors-and-Erasures Coding to Combat Impulse Noise on Digital Subscriber Loops"**
- **GLOBECOM '90, IEEE GLOBAL TELECOMMUNICATIONS CONFERENCE & EXHIBITION vol. 3, 2-5 décembre 1990, pages 1979-1983, San Diego, US; W.C. WONG et al.: "Estimating Unreliable Packets in Subband Coded Speech"**
- **IEE PROCEEDINGS I. SOLID-STATE & ELECTRON DEVICES vol. 137, no. 1, février 1990, pages 47-59, Stevenage, GB; G. BENELLI et al.: "New detection algorithm with reduced complexity"**

## Description

L'invention concerne un système de transmission à multiétages comprenant un émetteur pour émettre des signaux numériques selon une modulation codée à multiniveaux selon une partition d'affectations binaires de points d'une constellation, avec au moins un niveau codé par un codage externe en blocs concaténé avec un codage interne, ledit système comprenant un récepteur à multiétages comportant un décodeur muni:

- de moyens de détection pour effectuer, dans chaque étage, une détection pour un niveau de partition,
- de premiers moyens de décodage interne pouvant générer des effacements de séquences de bits,
- de seconds moyens de décodage externe pouvant corriger les effacements et des erreurs de séquences de bits.

L'invention concerne également un récepteur et un décodeur de signaux numériques mis en oeuvre dans un tel système.

Un tel système trouve son application dans la transmission de signaux numériques par un canal de transmission.

Il peut s'agir de transmettre des signaux numériques de télévision par exemple à haute définition par un canal satellite ou des signaux numériques par des faisceaux hertziens. Il peut s'agir également de transmettre du son par radio mobile, ou des données numériques pour leur stockage par exemple dans un disque compact, un magnétoscope numérique. Dans ces cas, il est nécessaire à l'émission d'opérer à la source une réduction préalable de débit par un codeur de source et de rétablir le débit à la réception par un décodeur de source. Dans les cas où l'on désire transmettre des données numériques entre deux unités de traitement numérique, par exemple entre deux calculateurs, cette réduction de débit par un codeur de source ne s'impose pas.

L'application la plus représentative étant celle concernant la télévision haute définition (TVHD) pour laquelle les problèmes sont les plus étendus, la présente demande est présentée pour cette application.

La numérisation des signaux de Télévision Haute Définition (TVHD) engendre un débit brut total de l'ordre de 800 Mbits/sec. La transmission de ces informations à un tel débit est économiquement irréalisable sur les canaux de transmission existants. Plusieurs techniques de codage pour la réduction du débit (codage de source) ont été développées. Les performances de ces algorithmes de codage se mesurent en terme de leur "facteur de réduction" de débit et de la qualité de l'image restituée après le décodage. Plus on réduit la redondance du signal, plus l'information transmise est signifiante. Les éventuelles erreurs de transmission qui peuvent assez facilement être corrigées si les informations transmises sont redondantes, ont des conséquences de plus en plus graves lorsque le facteur de réduction augmente.

En conséquence, la transmission des signaux numériques TVHD nécessite une protection judicieuse. Afin de ne pas apercevoir les effets d'erreurs de transmission sur un écran, le taux d'erreurs en ligne doit être inférieur à $10^{-11}$.

Le canal utilisé pour la "Diffusion Directe par Satellite" (DBS) se caractérise par :

- une largeur de bande de 27 MHz,
- une faible puissance (surtout pour la liaison provenant du satellite) et la présence d'un bruit puissant, considéré comme additif, blanc et gaussien,
- et des distorsions non linéaires.

L'acheminement des signaux numériques de TVHD via un tel canal exige un codage de source à un taux de compression important ainsi qu'une modulation numérique à haute efficacité spectrale.

Les techniques de codage de source, par exemple basées sur une transformation orthogonale, peuvent diminuer le débit par un facteur supérieur à 10 tout en assurant une bonne qualité d'image restituée. Ceci conduit à transmettre un débit binaire de l'ordre de 60 à 70 Mbits/s. Mais la transmission de tels signaux sur un canal satellite exige une modulation numérique à efficacité spectrale atteignant 2,7 bits/s/Hz.

Il est ensuite nécessaire d'opérer un codage de canal pour protéger la transmission contre les imperfections du canal. Les techniques de codage et de modulation classiques s'avèrent limitées pour répondre pleinement aux exigences d'une transmission correcte (dans ces techniques, la fonction codage est considérée comme une entité indépendante de la fonction modulation). Cependant les techniques de codage se sont sensiblement améliorées grâce à la technique de codage proposée par G. UNGERBOECK dans l'article intitulé : "Channel coding with multilevel/phase signals" présenté dans IEEE Transactions on Information Theory vol. IT-28 n°1, January 1982, p. 55-67.

Il est proposé de considérer le codage de canal et la modulation comme une entité et pour cela de combiner un codage de canal avec une modulation numérique. Ceci permet d'accroître l'efficacité de la transmission numérique, donc d'améliorer les performances, sans sacrifier l'efficacité spectrale. La redondance ajoutée par le codage est transmise par la redondance de l'alphabet au lieu de diminuer le taux de données. Cette technique est basée sur le principe de maximisation de la distance euclidienne minimale entre les séquences de points codés transmis.

Ainsi, après un codage qui transforme p bits d'informations en m bits, avec m>p où m-p représente la redondance ajoutée pour la protection d'informations lors de la transmission, avec une modulation à $2^m$ états on dispose de $2^{m-p}$

états supplémentaires pour transmettre cette redondance. Cette technique de modulation permet d'effectuer une répartition spatiale et non pas temporelle de la redondance.

A la suite de la découverte par G. UNGERBOECK des modulations codées en treillis (MCT), des modulations codées en bloc (MCB) et des modulations multidimensionnelles codées en treillis ont été proposées.

Des MCT de complexité modérée (4 ou 8 états) peuvent donner un gain de codage de 3 à 4 dB. Mais, dans les applications grand public, l'implantation d'un décodeur de Viterbi nécessaire pour décoder ces MCT reste coûteuse avec la technologie actuelle. Une technique de codage attrayante pour ces applications est celle du codage à multiniveaux. L'intérêt de cette technique est qu'elle est adaptée à un procédé simple de décodage sous-optimal s'effectuant par étapes et présentant un bon compromis entre les performances et la complexité d'implantation.

En se basant sur le principe de partition d'une constellation révélé par G. UNGERBOECK, l'utilisation du codage à multiniveaux a été analysée en particulier par G.J. POTTIE et D.P. TAYLOR dans "Multilevel Codes Based on Partitioning" IEEE Trans. Information Theor. vol. 35, n°1, Jan. 1989, p. 87 - 98.

Dans leur article ces auteurs analysent premièrement le principe du codage à multiniveaux qui consiste à partitionner une constellation et à coder les points de la constellation et deuxièmement définissent un codeur multiétages, un étage de codage étant affecté à un niveau de partition, les points étant transmis par blocs à travers un canal de transmission.

A la réception, un décodeur multiétages opère l'opération inverse et restitue des points correspondant aux points émis. Dans un décodeur classique ceci met en oeuvre des opérations de décision qui estiment des points et déterminent des bits pour les codes des points estimés en fonction de la phase et de l'amplitude qui sont détectées à la réception pour chaque point reçu. Selon les diverses conditions de transmission et de réception, certains des bits estimés sont erronés. Un premier étage du décodeur multiétages décide d'après le premier niveau de la partition. Le résultat délivré par ce premier étage est utilisé pour valider la mise en fonctionnement du second étage et ainsi de suite jusqu'au dernier étage. Dans l'article de G.J. POTTIE et D.P. TAYLOR, on introduit une notion supplémentaire d'effacement de bits après chaque décodage d'étage opérant un décodage concaténé. Ceci accroît les performances du décodeur mais au prix d'une complexité accrue. En effet, ceci nécessite l'adjonction d'un second décodeur pour corriger les erreurs et remplir les effacements de bits.

La notion d'effacement a par ailleurs été appliquée par R.H. DENG et D.J. COSTELLO à des effacements de séquences de bits dans l'article "High rate concatenated coding systems using bandwith efficient trellis inner codes" IEEE Transactions on Communication, vol 37, n°5, Mai 1989, pages 420-427. Bien que le terme concaténé soit utilisé dans cet article, il s'agit en réalité de codes cascadés. En effet pour concaténer ou cascader deux codes, on utilise un codeur externe suivi d'un codeur interne. Pour les codes concaténés, on code par le codeur interne successivement chaque symbole du code externe. Pour les codes cascadés, on code par le codeur interne, un paquet de plusieurs symboles du code externe. Ces deux codages nécessitent au décodage des techniques de décodage totalement différentes. En effet, dans le cas d'un décodage de codes concaténés, chaque symbole après le décodage est indépendant de celui qui le suit. Par contre dans le décodage de codes cascadés, les symboles après le décodage sont interdépendants et doivent être traités en conséquence. En particulier le codage par des codes cascadés nécessite un entrelaceur au codage et un désentrelaceur au décodage entre les codeur/décodeur interne et externe. Ceci alourdit bien évidemment le traitement et la réalisation matérielle des dispositifs de codage et de décodage. De plus, comme l'indique le document, le gain de codage ainsi obtenu, par rapport aux techniques sans effacement, se situe entre 0,05 et 0,1 dB ce qui est relativement modeste.

Le but de l'invention est d'accroître également les performances du décodage classique en traitant des séquences de bits tout en conservant une complexité équivalente des moyens matériels. Cette amélioration des performances doit consister, pour un taux d'erreurs binaires donné, à réduire le rapport signal à bruit à l'émission ce qui permet en conséquence de réduire la puissance de l'émission.

Ce but est atteint avec un système pour lequel l'émetteur utilise un codage interne en blocs, le décodeur comprenant au moins un étage pour lequel:

- les premiers moyens effectuent un décodage interne en générant des mots-code internes estimés du code interne en blocs et en générant un effacement de tout mot-code interne estimé, chaque fois que sa détermination est ambiguë,
- les seconds moyens corrigeant les effacements de mots-code internes estimés et des erreurs de mots-code internes estimés,
- ledit étage comportant un codeur codant les sorties desdits seconds moyens pour valider les moyens de détection de l'étage suivant.

Avantageusement un gain en performance est obtenu, sans augmenter la complexité matérielle du décodeur, dans le cas par exemple d'une modulation par déplacement de phase MDP, (PSK en langue anglaise) ou d'une modulation d'amplitude de deux porteuses en quadrature MAQ (QAM en langue anglaise).

Le décodeur selon l'invention peut opérer avec des modulations codées de plusieurs types. Il peut s'agir de modulations MDP, de modulations MAQ ou d'autres modulations. Dans le cas de modulations MDP, les points de la constellation possèdent la même amplitude mais diffèrent par leurs phases.

Dans le cas d'une modulation MDP-8 on a observé un gain de 0,7 dB par rapport aux techniques classiques. Ce gain est 7 fois supérieur à celui obtenu par R.H. DENG et D.J. COSTELLO.

Les moyens de décodage interne effectuent un décodage à maximum de vraisemblance des mots-code internes ayant un nombre fixe de bits estimés, une partie information du mot-code interne constituant un symbole externe, l'effacement de tout symbole externe étant effectué lorsque la détermination d'au moins un bit du mot-code interne est incertaine.

Le décodeur tire ainsi avantage du codage à multiniveaux qui met en oeuvre la notion de partition qui est adaptée à un procédé simple de décodage sous-optimal s'effectuant par étapes et présentant un bon compromis entre les performances et la complexité d'implantation.

Il tire également avantage du principe de concaténation de codes qui permet une complexité relativement faible de la réalisation matérielle avec de bonnes performances vis-à-vis d'un dispositif équivalent à codes non concaténés.

La procédure d'effacement est effectuée sur un nombre fixe de points reçus, égal au nombre de bits d'un mot-code du code interne, sur les symboles du code externe, symbole après symbole. Cette procédure est opérée pour chaque symbole externe indépendamment des autres symboles externes ce qui permet une fiabilité de décision plus importante.

En utilisant un décodage à maximum de vraisemblance, le décodeur interne présente alors une efficacité optimale. Le décodeur externe peut profiter de la présence de corrélations d'erreurs en sortie du décodage interne.

Le décodeur selon l'invention ne nécessite aucun entrelaceur au codage, donc aucun désentrelaceur au décodage. Ceci simplifie beaucoup la réalisation matérielle.

Pour pouvoir effectuer le décodage proprement dit, il faut détecter où se situe la position d'un point reçu dans la constellation de la modulation utilisée. Cette constellation est partitionnée suivant plusieurs niveaux de partition. Un étage opère pour un seul niveau de partition.

Pour chaque étage, les moyens de détection déterminent, pour chaque point reçu PR, un couple de distances (D1, D2) entre ledit point reçu PR et deux points PT1, PT2 les plus proches faisant partie du sous-ensemble du niveau de partition dudit étage, ainsi qu'une suite de couples binaires $b^p_1$, $b^p_2$ de même poids p que les affectations binaires des points PT1 et PT2 respectivement.

Ces couples binaires $b^p_1$, $b^p_2$ de même poids p forment des suites de bits organisés en séquence. Si le code interne à l'émission est de longueur n, les séquences après décodage constituent des mots-code internes de n bits $b^p$. C'est-à-dire n bits de même poids p que les n points estimés après détection.

L'invention utilise des codes concaténés formés à partir d'un code interne représenté par un treillis et d'un code externe en blocs. Le treillis fournit une représentation du code interne avec tous les chemins possibles représentant des points de la constellation émis consécutivement. Les séquences étant, dans le code en treillis, séparées entre elles par des noeuds connus du décodeur, les premiers moyens du décodage interne selon l'invention :

- calculent, pour tout noeud du treillis, des cumuls de distances (D1, D2) sur des chemins possibles du treillis répartis sur les points précédents décodés,
- déterminent un chemin ayant ledit cumul le plus faible,
- attribuent au bit $b^p$, correspondant audit noeud, le même bit de poids p que celui $b^p_1$ ou $b^p_2$ de l'affectation binaire du point PT1 ou PT2 de la dernière distance (D1, D2) du cumul, et lorsque deux cumuls pour un même noeud ne sont séparés que d'un écart inférieur à un faible écart prédéterminé, lesdits premiers moyens mettent l'ensemble du mot-code interne en état d'effacement.

La constellation d'une modulation codée peut être partitionnée en plusieurs niveaux. Chacun des niveaux est codé et chaque étage du décodeur traite alors un seul desdits niveaux. Il est aussi possible que des étages suivants ne mettent pas en oeuvre de procédure d'effacements de séquence, cette procédure étant alors réservée aux premiers niveaux de partition. Dans ce cas, le décodeur comprend en outre au moins un étage muni desdits moyens de détection et de premiers moyens qui effectuent un décodage interne en générant des mots-code estimés d'un code interne.

Il est également possible que le ou les derniers niveaux de partition ne soient pas codés. Dans ce cas, le ou les étages correspondants sont uniquement munis desdits moyens de détection qui effectuent, validés par les étages qui le/les précèdent, une détection de points reçus PR non codés.

Chaque étage agit en cascade sur les étages qui le suivent. Pour cela, les bits décodés d'un étage sont exploités pour effectuer les décisions dans l'étage suivant.

L'invention sera mieux comprise à l'aide des figures suivantes données à titre d'exemples non limitatifs qui représentent :

- figure 1-A : un schéma bloc d'un dispositif de codage de signaux numériques,
- figure 1-B : un schéma bloc d'un dispositif de décodage de signaux numériques,
- figure 2 : une représentation d'une constellation Ao MDP-8 et de ses trois niveaux de partition,
- figure 3 : un schéma d'un codeur à multiétages pour codes concaténés,
- figure 4 : un schéma d'un décodeur à multiétages pour codes concaténés,
- figure 5 : un schéma d'un décodeur à multiétages avec deux étages de protection,
- figure 6 : un schéma détaillé du décodeur de la figure 5,
- figure 7 : une représentation d'une constellation MDP-8 avec un point P reçu,
- figure 8 : une représentation du treillis d'un code interne,
- figure 9 : un schéma d'un décodeur de Viterbi à effacement avec une estimation adaptative,
- figure 10 : un schéma d'un décodeur de Viterbi à effacement avec une autre estimation adaptative.

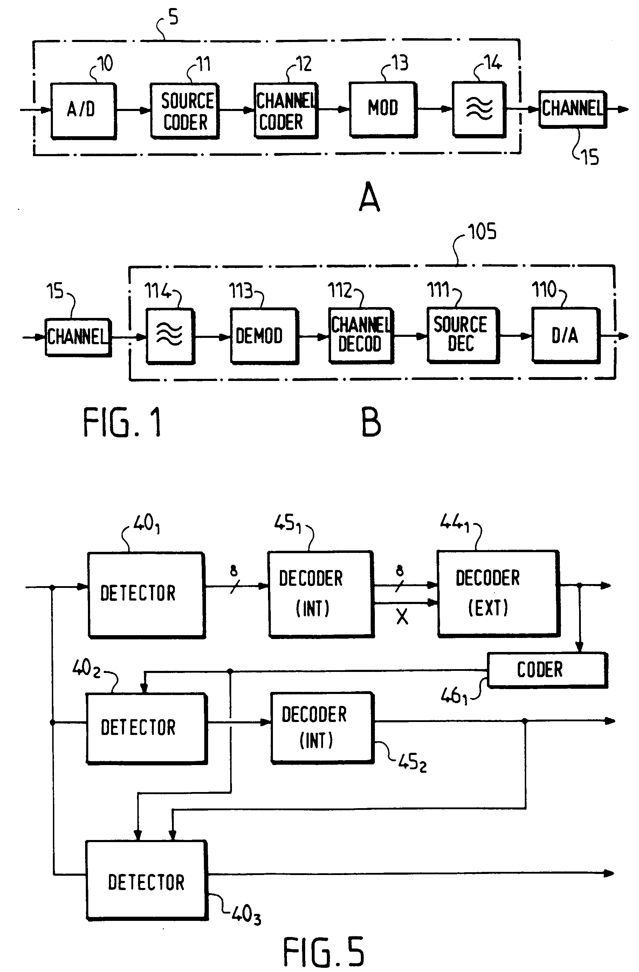

La figure 1-A représente un schéma-bloc d'un dispositif de codage 5 de signaux numériques tel qu'il apparait dans la partie émettrice d'une chaîne de transmission. Il comprend en série :

- une source 10, par exemple un convertisseur analogique-numérique, qui délivre les signaux numériques à coder lorsqu'ils ne sont pas déjà disponibles sous forme numérisée,
- un codeur de source 11 (qui peut ne pas exister),
- un codeur de canal 12,
- un modulateur 13,
- un filtre d'émission 14.

Le dispositif de codage est relié à un canal de transmission 15. Il peut s'agir de liaisons hertziennes, de liaisons par satellite ou de liaisons par câbles.

Pour une application de transmission de signaux TVHD avec un débit binaire des échantillons du signal vidéo de 864 Mbits/s, ce débit binaire est réduit à 70 Mbits/s à la sortie du codeur de source 11. Ces échantillons sont codés par le codeur de canal 12 pour les rendre non vulnérables aux imperfections du canal. Le modulateur 13 adapte ensuite les échantillons numériques au canal de transmission par exemple un canal satellite.

La figure 1-B représente le schéma-bloc d'un dispositif de décodage 105 qui effectue à la réception des opérations inverses de celles effectuées à l'émission. Pour cela il comprend (à la sortie du canal 15) :

- un filtre de réception 114,
- un démodulateur 113,
- un décodeur de canal 112,
- un décodeur de source 111 (qui peut ne pas exister),
- un convertisseur numérique-analogique 110 lorsque les signaux numériques sont utilisés sous forme analogique.

Le dispositif de codage 5, le dispositif de décodage 105 et le canal de transmission 15 constituent un système de codage/décodage de signaux numériques à modulation codée.

CODAGE

L'invention concerne le décodage de canal qui est l'opération inverse du codage de canal opéré à l'émission. Le codage de canal concerné par l'invention est un codage à multiniveaux. Dans un souci de clarté le principe du codage à multiniveaux est d'abord expliqué.

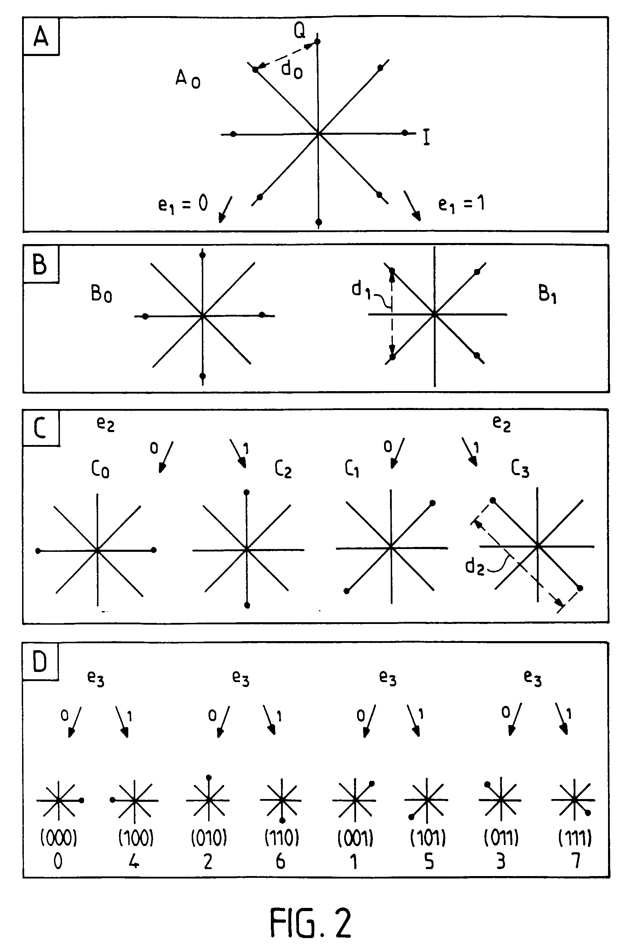

Considérons (figure 2-A) une constellation $A_0$ à $2^m$ points capable d'assurer la transmission de m bits par point. Si M (avec $M \leq m$) désigne le nombre de bits à coder, la constellation $A_0$ est partitionnée en M niveaux donnant ainsi $2^M$ sous-emsembles. Le principe de cette partition est identique à celui défini par G. UNGERBOECK. Ce principe maximise la distance euclidienne minimale dans les sous-ensembles de la partition. Si on désigne par $d_i$ la distance euclidienne minimale dans les sous-ensembles obtenus au $i^{\text{ème}}$ niveau de partition, l'inégalité suivante doit être vérifiée :

$$d_0 < d_1 < d_2 < ... < d_M$$

où $d_0$ est la distance minimale dans $A_0$.

Ainsi, les M bits $e_1$, $e_2$,..., $e_i$..., $e_M$, (avec $e_i$ le bit affecté au $i^{\text{ème}}$ niveau de la partition), sélectionnent un des $2^M$ sous-ensembles, et les m - M bits restants désignent un point dans le sous-ensemble sélectionné. La figure 2 donne le schéma des partitions pour une modulation MDP-8. La constellation $A_0$ (fig. 2A) est partitionnée (fig. 2B) tout d'abord en deux sous-ensembles $B_0$, $B_1$, de distance minimale $d_1$, avec $e_i = e_1 = 0/1$ ($e_1 = 0$ pour $B_0$ et $e_1 = 1$ pour $B_1$), puis (fig. 2C) en quatre sous-ensembles $C_i$, $i \in \{0,1,2,3\}$, de distance minimale $d_2$, avec $e_i = e_2 = 0/1$ ($e_2 = 0$ pour $C_0$ ou $C_1$ et $e_2 = 1$ pour $C_2$ ou $C_3$) et enfin en 8 sous-ensembles D (fig. 2D). Un sous-ensemble est alors constitué d'un point. On a $d_0 < d_1 < d_2$.

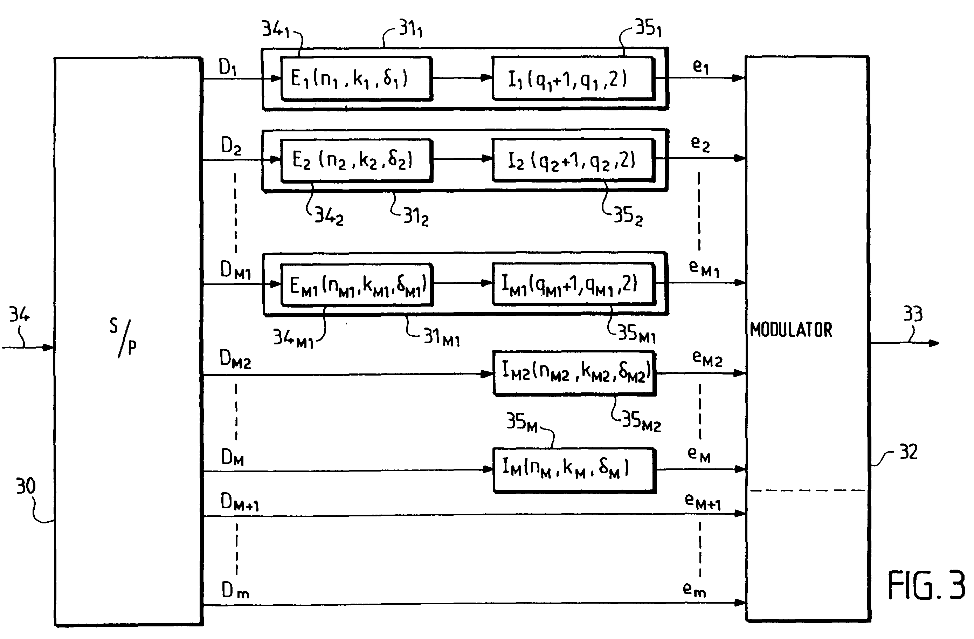

Ce procédé d'affectation des points de la constellation a pour but de classer les m bits que représente le point émis en fonction de leurs vulnérabilités vis-à-vis du bruit. Il est très facile de constater que le bit $e_2$ est moins vulnérable que le bit $e_1$, puisqu'il lui correspond une distance euclidienne minimale $d_2 > d_1$. D'après le principe de partition décrit précédemment, on peut montrer que si les bits $e_k$, $k \leq i - 1$, sont suffisemment protégés pour qu'ils soient corrects, le bit $e_i$, $i \leq M$, est mieux protégé vis-à-vis du bruit que tous les autres bits $e_j$, $j < i$ et que les (m-M) derniers bits sont les moins vulnérables. Cela implique qu'il est plus judicieux de coder ces bits séparément avec des codes différents et de ne pas procéder à un codage série classique où tous les bits sont protégés de la même façon vis-à-vis du bruit du canal. C'est le principe du codage à multiniveaux qui consiste, après avoir partitionné la constellation $A_0$ en M niveaux, à utiliser M codeurs $E_i$, $i = 1,..., M$, pour protéger ces M bits avec plusieurs niveaux de protection. Le schéma de ce codeur est représenté sur la figure 3. Le train de données à transmettre (connexion 34) de débit D est divisé en m trains de débits $D_i$, $i = 1,..., m$ dans l'élément 30. Les M premiers trains sont codés par M codes, les trains de données suivants $D_{M+1}$ à $D_m$ peuvent ne pas être codés. Parmi les M trains binaires codés, les premiers, de $D_1$ à $D_{M1}$, sont codés par des codes concaténés ($E_i$, $I_i$), $E_i$ étant un code en blocs et $I_i$ étant un code de parité. Les trains binaires suivants, après $D_{M1}$ et jusqu'à $D_M$, sont codés par un codage binaire unique $I_i$ ($n_i$, $k_i$, $\delta_i$).

Les codes $E_i$ ($n_i$, $k_i$, $\delta_i$), $i = 1... M$, ont un rendement $R_i = k_i/n_i$ où $n_i$ représente le nombre de bits transmis par bloc, $k_i$ représente le nombre de symboles d'informations transmis par bloc, $\delta_i$ représente la distance minimale de Hamming. Des codeurs externes $34_1$, $34_2$,... $34_{M1}$ effectuent les codages $E_i$. Un symbole de code $E_i$ est représenté sur $q_i$ bits.

Les codes de parité $I_i$ ($q_{i+1}$, $q_i$, 2) codent chaque symbole de $q_i$ bits délivrés par les codeurs externes, en leur ajoutant un bit de parité. Des codeurs internes $35_1$, $35_2$,... $35_{M1}$ effectuent les codages $I_i$.

Le codage de chaque symbole du code externe par un code interne de parité constitue le codage concaténé des deux codes $E_i$ et $I_i$.

Les $M_1$ bits sont codés par un codage concaténé d'où leurs distances minimales équivalentes (sachant que $d_i$ représente les distances issues de la partition, avec :

$$d_0 < d_1 < d_2 ... < d_{M1} ... < d_M),$$

$$(dis_1)^2_i = 2\, d^2_{i-1}\, \delta_i,\ i = 1,... M_1 .$$

De même les distances minimales équivalentes des bits codés par un code unique de distance minimale $\delta_i$ ($i > M_1$) sont :

$$(dis_2)^2_i = \delta_i\, d^2_{i-1},\ i = M_1 + 1,... M,$$

et ceux qui ne sont pas codés :

$$(dis_3)^2_i = d^2_M = \text{constante}, \qquad i = M+1,... m.$$

Le système est optimal si :

$$(dis_1)_i = (dis_2)_i = (dis_3)_i.$$

Les codes $E_1,... E_{M1}$ peuvent être des codes Reed-Solomon sur un corps de Galois CG ($2^{q1}$). C'est-à-dire que chaque symbole du code RS est constitué de $q_1$ bits.

Les codes $I_1,... I_{M1}$ peuvent être des codes binaires de parité ($q_1 + 1$, $q_1$, 2).

Si l'on suppose que tous les codes $E_i$ ont la même longueur, avec $n_i = n$ et $q_i = q$, et que les M codes $E_i$ sont des codes en bloc, on peut décrire ce codage par une structure matricielle identique à celle utilisée pour les MCB. Un mot de code correspond à n (q+1) points de la constellation et peut être représenté par une matrice binaire G à m lignes et n (q+1) colonnes où la $j^{eme}$ colonne représente l'affectation binaire du $j^{eme}$ point du bloc, et la $i^{eme}$ ligne représente

les bits affectés au $i^{ème}$ niveau de partition. La ligne i, $i = 1,..., M_1$ est un mot de code concaténé et les (m-M) dernières lignes contiennent des bits soit non codés soit codés par un code interne unique. Avec, par exemple, trois niveaux de partition dans le cas d'une modulation MDP-8 on a :

$$G = \begin{vmatrix} e_1^1 & e_1^2 & \ldots & e_1^i & e_1^{i+1} & \ldots & e_1^{n(q+1)} \\ e_2^1 & e_2^2 & \ldots & e_2^i & e_2^{i+1} & \ldots & e_2^{n(q+1)} \\ e_3^1 & e_3^2 & \ldots & e_3^i & e_3^{i+1} & \ldots & e_3^{n(q+1)} \end{vmatrix}$$

Les bits d'une colonne, par exemple $e_1^1$, $e_2^1$, $e_3^1$, forment un point $r^1$.

Le codage à multiniveaux (figure 3) est effectué à l'aide d'un circuit 30 de conversion série-parallèle qui transforme les données série de débit D en données parallèles de débit $D_1$, $D_2$... $D_m$. Les $M_1$ premiers trains binaires sont codés par des codeurs $31_1$, $31_2$ ... $31_{M1}$ qui délivrent les données binaires codées $e_1$, $e_2$ ... $e_{M1}$ issues d'un codage concaténé par les codeurs $34_1$ à $34_{M1}$ et $35_1$ à $35_{M1}$. Les trains binaires de $M_2$ à M sont codés par des codeurs $35_{M2}$ .. $35_M$ qui délivrent des données binaires $e_{M2}$ ... $e_M$ issues du codage $I_i$ unique. Des trains binaires $D_{M+1}$ ... $D_m$ peuvent ne pas être codés. Un organe de sélection 32 permet d'assurer à chaque mot ($e_1$, $e_2$ ... $e_m$) l'affectation binaire d'un point de la constellation contenant $2^m$ points qui est émis par le modulateur (connexion 33).

A titre d'exemple, dans le cas d'une MDP-8, avec m = M = 3, le codage du premier niveau (1er étage) peut être un codage concaténé formé :

-   d'un code $E_1$ = RS (40, 34, 7) sur un corps de Galois de 256 éléments. Le nombre de bits d'un symbole est $q_1 = 8$,
-   et d'un code $I_1$ = Parité (9, 8, 2).

Le codage du second niveau (2ème étage) est codé par un code de parité :

$$I_2 = \text{Parité (20, 19, 2)}.$$

Le troisième niveau (3ème étage) n'est pas codé.
La matrice se présente alors sous la forme :

| 8 | 1 | 8 | 1 | ...... | | 8 | 1 |
|---|---|---|---|--------|---|---|---|
| 19 | | | 1 | 19 | 1 | ...... | |
| 360 | | | | | | | |

Un point de la MDP-8 est représenté par une colonne de cette matrice. Un bloc est alors formé de 360 points consécutifs.

DECODAGE

Le décodage va consister à effectuer les opérations inverses du codage. On effectue une détection avec chaque étage dans chacun des niveaux de la partition. On effectue un décodage concaténé dans les étages où il a été effectué un codage concaténé. Après chaque détection dans un sous-ensemble de la partition, chaque étage effectue deux décodages (décodage interne et décodage externe).

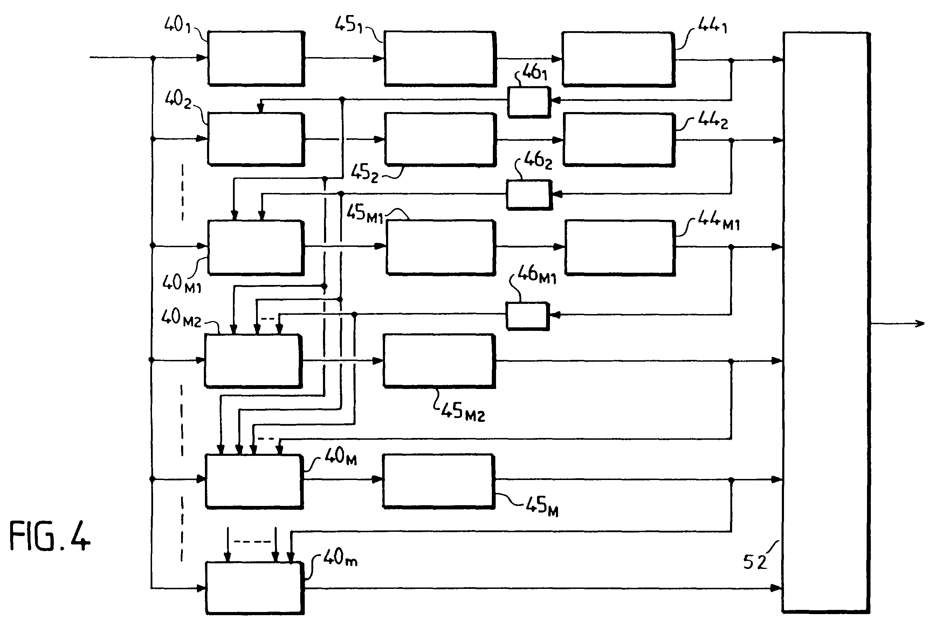

La figure 4 représente un schéma général d'un décodeur à multiétages avec certains étages opérant sur des codes concaténés. Des détecteurs $40_1$... $40_{M1}$, $40_{M2}$... $40_M$... $40_m$ effectuent des détections chacun dans un niveau de partition. Pour les étages i = 1 à $M_1$ des décodeurs $45_1$, $45_2$... $45_{M1}$ effectuent des décodages internes à maximum de vraisemblance. Ceux-ci délivrent des mots-code internes effacés ou non effacés respectivement à des décodeurs externes $44_1$, $44_2$... $44_{M1}$. Lesdits décodeurs internes suppriment la redondance due au codage interne de chaque point. Les décodeurs externes donnent ensuite des estimations des séquences de bits.

Pour estimer un niveau i, on tient compte des estimations effectuées dans les niveaux précédents. Pour cela, les informations estimées par le niveau i-1 sont à nouveau codées par des codeurs $46_1$, $46_2$... $46_{M1}$ pour retrouver la redondance des mots-code internes. Ceci est nécessaire pour avoir des mots-code de longueur $n(q+1)$ bits nécessaires aux étages suivants.

Pour les étages où il n'y a qu'un seul type de codage interne ($i = M_2$ à M), on effectue seulement une détection et un décodage à maximum de vraisemblance.

Pour les étages où il n'y a pas de codage ($i = M+1$ à m), on effectue seulement une détection. Les données de sortie entrent dans une mémoire 52.

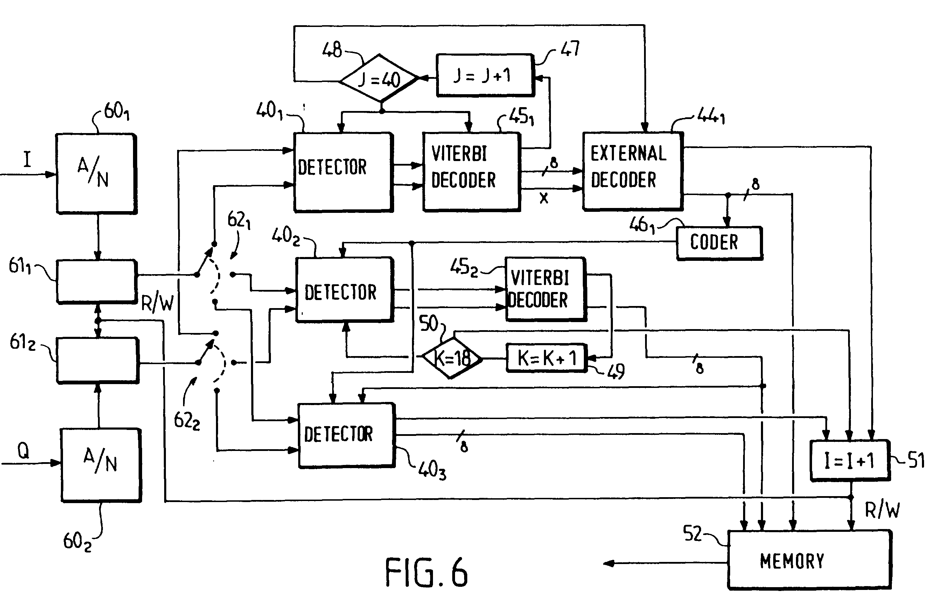

A titre d'exemple, les figures 5 et 6 représentent un décodage à multiétages pour décoder des codes concaténés utilisant une modulation MDP-8.

Sur la figure 5 :

- le premier étage comprend un détecteur $40_1$, un décodeur interne $45_1$, un décodeur externe $44_1$ et un codeur $46_1$ (codage concaténé),
- le second étage comprend un détecteur $40_2$ et un décodeur interne $45_2$ (codage simple),
- le troisième étage comprend un détecteur $40_3$ (pas de codage).

Le premier étage décode un code externe RS (40, 34, 7) concaténé avec un code interne de parité (9, 8, 2).
Le second étage décode un code interne de parité (20, 19, 2).
Un bloc S transmis contient 360 points de la constellation $S = (s_1 ..... s_{360})$.
Un bloc R reçu contient également 360 points reçus :

$$R = (r_1 ...... r_{360}).$$

Le bloc reçu R contient du bruit qui génère une incertitude de détection. Un schéma détaillé du décodeur est représenté sur la figure 6. Les signaux reçus en phase I et en quadrature Q sont numérisés dans des convertisseurs analogique-numérique $60_1$, $60_2$ qui sont respectivement suivis par des mémoires $61_1$, $61_2$ qui stockent les données numérisées afin de permettre leur traitement par blocs. Des commutateurs $62_1$, $62_2$ distribuent, successivement aux trois étages, des données numérisées afin que les étages opèrent les uns après les autres sur les mêmes blocs de données.

Premier étage :

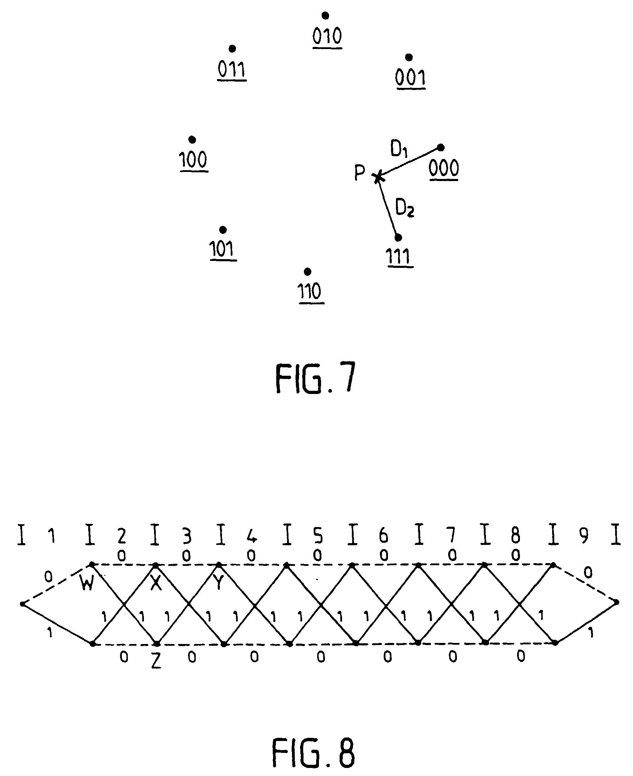

Le premier étage effectue une première estimation dans le détecteur $40_1$. Pour cela, il détecte un point reçu P et le situe dans la constellation MDP-8 représentée sur la figure 7. Un point d'une constellation MDP-8 est codé sur trois bits. Le premier étage du détecteur détermine le bit de poids le plus faible, le second étage détermine le bit de poids intermédiaire et le troisième étage détermine le bit de poids le plus fort. Le premier étage délivre ainsi des suites de bits de poids faible.

Pour estimer le bit estimé pour le point $P_o$, le détecteur $40_1$ calcule deux distances D1 et D2 par rapport aux deux points de la constellation MDP-8 qui sont les plus proches du point reçu P. Une telle détection s'opère pour une séquence de points reçus, ici 9 points compte tenu du décodeur externe utilisé. Le détecteur $40_1$ délivre ainsi des séquences de 9 couples de bits estimés ainsi que les distances $D_1$ et $D_2$ correspondantes. Pour chaque séquence de 9 couples de bits correspondant à 9 points reçus, le décodeur de Viterbi $45_1$ utilise ces données et détermine la qualité certaine ou ambiguë de chaque mot-code interne. Le décodage de Viterbi est un décodage à maximum de vraisemblance qui utilise le treillis du code mis en oeuvre par le codeur.

Le treillis du code interne est représenté sur la figure 8 pour une séquence de 9 points reçus. Les points noirs de la figure 8 représentent les noeuds du treillis. Les traits discontinus correspondent à des bits 0 et les traits continus correspondent à des bits 1. Un chemin aboutissant à un noeud Ni du treillis représente ainsi l'état des décisions effectuées sur les i-1 points précédents de la modulation.

Le décodage à maximum de vraisemblance va consister à déterminer pour, par exemple, un noeud Y, des chemins possibles dans le treillis compte tenu des points précédents déjà décodés. Ainsi pour le noeud Y (figure 8), il peut exister les chemins W X Y ou W Z Y. On calcule une métrique correspondant au cumul des distances $D_1$, $D_2$ déterminées pour chaque point précédent et on choisit le chemin ayant la plus petite métrique comme étant le chemin le plus vraisemblable. Au noeud Y, le décodeur attribue alors au bit du point reçu le bit soit 0 soit 1 correspondant au chemin sélectionné. Cette détermination est effectuée de la même manière à chaque noeud du treillis d'une séquence.

Mais il peut apparaître des situations où les cumuls calculés sur deux chemins différents soient très rapprochés : il y a alors ambiguïté. Dans ce cas, une estimation n'est pas effectuée si l'écart entre les deux cumuls est inférieur à un faible écart prédéterminé. La séquence est alors mise en "état d'effacement". Elle est dite "effacée". Cette comparaison des métriques n'est faite que dans une séquence à la fois et se traduit par un effacement d'une seule séquence à la fois, une séquence correspondant à un symbole du code externe.

Ceci n'est absolument pas le cas avec des codes cascadés qui ne peuvent opérer que sur plusieurs séquences à la fois sans que leur nombre puisse a priori être limité. Il peut, en effet, apparaître des effacements sur un grand nombre de séquences ce qui complique beaucoup le décodage avec une fiabilité de décodage peu élevée.

Lorsqu'une séquence est effacée selon l'invention, il se crée ainsi une ambiguïté pour la totalité des bits de la séquence. Cette ambiguïté est ensuite levée par le décodeur externe $44_1$ (figure 6).

Le décodeur de Viterbi $45_1$ délivre ainsi des séquences de 9 bits, dont 8 bits représentent l'information codée, et des séquences effacées. Un mot-code externe correspond à 40 séquences de 8 bits soit 320 bits. Le décodeur externe, qui peut être un décodeur Reed-Solomon, opère sur 8 X 40 bits soit 320 bits et fournit les bits estimés par le premier étage soit 40 séquences de 8 bits d'information.

Un compteur 47 détermine le nombre J de mots-code internes traités. Un comparateur 48 permet soit de poursuivre la détection (bloc $40_1$) et le traitement du décodeur de Viterbi (bloc $45_1$) si J < 40 soit de valider le démarrage du décodeur externe $44_1$ lorsque J = 40.

### Second étage.

Le second étage a besoin des bits du premier étage pour opérer. Les bits de parité ont été extraits par le premier étage. Il faut les réintroduire dans les 40 séquences avant d'introduire ces 40 séquences dans le second étage. Un codage de parité I (9, 8, 2) effectué par le codeur $46_1$ permet de le faire.

Les séquences de 40 x 9 bits ainsi reconstituées permettent au second détecteur $40_2$ de déterminer le niveau de partition $B_o$ ou $B_1$ à prendre en compte pour la détection. Le décodeur de Viterbi $45_2$ effectue ensuite un décodage sur 20 bits correspondant à 20 points reçus selon l'exemple choisi pour le codage.

Un compteur 49 et un comparateur 50 permettent comme pour l'étage précédent soit de poursuivre le traitement par l'étage si le nombre de mots-code internes n'est pas atteint soit de mettre en opération l'étage suivant, dans le cas inverse.

### Troisième étage.

Le troisième niveau de partition n'étant pas codé, cet étage opère seulement une détection dans ce troisième niveau de partition à l'aide du détecteur $40_3$. La sortie du décodeur $45_2$ entre dans le détecteur $40_3$ pour permettre cette détection.

Un compteur 51 est incrémenté d'une unité chaque fois qu'un étage entre en fonctionnement. Ce compteur 51 délivre un signal R/W lorsque tous les étages ont fini leur traitement. Ce signal permet d'écrire les résultats de chaque étage dans une mémoire 52 qui délivre les données décodées. Le signal R/W déclenche l'écriture de nouvelles données dans les mémoires $61_1$, $61_2$.

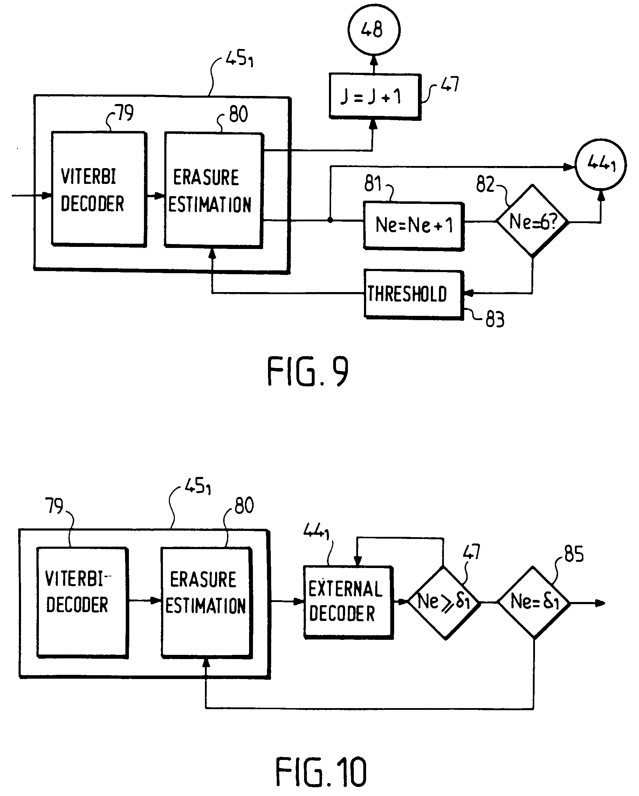

La figure 9 représente le schéma d'un décodeur de Viterbi à effacement $45_1$, formé d'un décodeur de Viterbi 79 proprement dit et d'un estimateur d'effacement 80. Comme cela a été indiqué précédemment, lorsque deux métriques (cumuls de distances) se rapportant à deux chemins ne sont séparées que par un écart $\varepsilon$, la séquence correspondante est effacée. Selon un mode adaptatif de réalisation, la valeur de cet écart $\varepsilon$ peut être modifiée. Un compteur 81 compte le nombre Ne de séquences effacées. Ce nombre Ne est comparé dans un comparateur 82 à une valeur prédéterminée, par exemple Ne = 6 dans cet exemple. Si le nombre de séquences effacées est inférieur ou égal à 6, le décodage par le décodeur $44_1$ se poursuit comme cela a été indiqué précédemment. Si le nombre de séquences effacées est supérieur à 6, le comparateur modifie le pas $\varepsilon$ (bloc 83) qui agit sur l'estimateur d'effacement 80 pour réduire le nombre de séquences effacées. Cette réduction s'effectue en estimant à nouveau la même séquence de points reçus.

On peut également réaliser l'invention selon un autre mode adaptatif. Celui-ci peut être combiné ou non avec le mode adaptatif précédent. Cet autre mode adaptatif est représenté sur la figure 10. Le décodeur de Viterbi à effacement $45_1$ comprend un décodeur de Viterbi 79 proprement dit et un estimateur 80 d'effacement.

A la sortie du décodeur de Viterbi à effacement $45_1$ est connecté le décodeur externe $44_1$ qui corrige les effacements. Sa capacité de corrections est limitée à un nombre $\delta_1$ - 1 d'effacements. Il peut par exemple corriger $N_e$ ($N_e \leq \delta_1$ - 1) effacements où $\delta_1$ est la distance de Hamming du code externe. Si le nombre Ne d'effacements est supérieur à ($\delta_1$-1), il délivre alors un résultat incorrect c'est-à-dire que tous les effacements ne sont pas corrigés. Selon l'invention, il est possible d'accroître la capacité de corrections du décodeur externe en la faisant passer de ($\delta_1$-1) à $\delta_1$ effacements. Pour cela, on effectue, à la sortie du décodeur externe $44_1$, un test (bloc 47) qui détermine si le décodeur externe $44_1$ est situé au-delà de ses capacités de corrections ($N_e \leq \delta_1$). On détermine lorsque le nombre d'effacements à corriger est égal à $\delta_1$ (bloc 85). Dans ce cas, on effectue le décodage externe non pas en plaçant en effacement le mot-code interne en cours mais en utilisant les mots-code internes $C_1$ ou $C_2$ qui se rapportent respectivement soit au point D1 ou soit au point D2 détecté pour le noeud considéré. Dans cette situation, en effet, il y a une grande probabilité pour que le mot-code interne correct corresponde à celui du point D1 ou du point D2. Donc, lorsque le nombre Ne d'effacements est égal à $\delta_1$, le décodeur externe $44_1$ opère tout d'abord en remplaçant l'effacement par le mot-code $C_1$. Si le résultat est mauvais, c'est-à-dire si le mot-code $C_1$ a une plus grande distance de Hamming que le mot-code $C_2$, on remplace alors l'effacement par le mot-code $C_2$.

Ce mode adaptatif peut délivrer des résultats améliorés pour certains codes interne et externe concaténés.

**Revendications**

1. Système de transmission à multiétages comprenant un émetteur pour émettre des signaux numériques selon une modulation codée à multiniveaux selon une partition d'affectations binaires de points d'une constellation, avec au moins un niveau codé par un codage externe en blocs concaténé avec un codage interne, ledit système comprenant un récepteur à multiétages comportant un décodeur muni:

   - de moyens de détection ($40_1$ - $40_m$) pour effectuer, dans chaque étage, une détection pour un niveau de partition,
   - de premiers moyens ($45_1$ -$45_M$) de décodage interne pouvant générer des effacements de séquences de bits,
   - de seconds moyens ($44_1$ -$44_{M1}$) de décodage externe pouvant corriger les effacements et des erreurs de séquences de bits,

   caractérisé en ce que l'émetteur utilise un codage interne en blocs, le décodeur comprenant au moins un étage pour lequel:

   - les premiers moyens effectuent un décodage interne en générant des mots-code internes estimés du code interne en blocs et en générant un effacement de tout mot-code interne estimé, chaque fois que sa détermination est ambiguë, une partie information du mot-code interne constituant un symbole externe,
   - les seconds moyens corrigeant les effacements de mots-code internes estimés et des erreurs de mots-code internes estimés,
   - ledit étage comportant un codeur ($46_1$ -$46_{M1}$) codant les sorties desdits seconds moyens pour valider les moyens de détection de l'étage suivant.

2. Système de transmission selon la revendication 1 caractérisé en ce que les moyens de décodage interne effectuent un décodage à maximum de vraisemblance des mots-code internes ayant un nombre fixe de bits estimés, l'effacement de tout symbole externe étant effectué lorsque la détermination d'au moins un bit du mot-code interne est incertaine.

3. Système de transmission selon l'une des revendications 1 ou 2 caractérisé en ce que pour chaque étage, les moyens de détection déterminent, pour chaque point reçu PR :

   - un couple de distances (D1, D2) entre ledit point reçu PR et deux points PT1, PT2 les plus proches faisant partie du sous-ensemble ayant le niveau de partition dudit étage,
   - et une suite de couples binaires $b^p_1$, $b^p_2$ de même poids p que les affectations binaires des points PT1 et PT2 respectivement.

4. Système de transmission selon la revendication 3, le codage interne étant représenté par un treillis, les points de la constellation étant, dans le code en treillis, séparés entre eux par des noeuds, caractérisé en ce que les premiers moyens du décodage interne :

   - calculent, pour tout noeud du treillis, des cumuls de distances (D1, D2) sur des chemins possibles du treillis répartis sur les points précédents décodés,
   - déterminent un chemin ayant ledit cumul le plus faible,
   - attribuent au bit $b^p$, correspondant audit noeud, le même bit de poids p que celui $b^p_1$, $b^p_2$ de l'affectation binaire du point PT1 ou PT2 de la dernière distance (D1, D2) du cumul, et lorsque deux cumuls pour un même noeud ne sont séparés que d'un écart inférieur à un faible écart prédéterminé, lesdits moyens mettent l'ensemble du mot-code interne en état d'effacement.

5. Système de transmission selon une des revendications 1 à 4 caractérisé en ce qu'il comprend en outre au moins un étage muni desdits moyens de détection ($40_M$) et de moyens ($45_M$) qui effectuent un décodage interne en générant des mots-codes internes estimés.

**6.** Système de transmission selon une des revendications 1 à 5 caractérisé en ce qu'il comprend en outre au moins un étage muni desdits moyens de détection ($40_m$) qui effectuent une détection de points reçus PR non codés.

**7.** Système de transmission selon une des revendications 4 à 6, lesdits seconds moyens ayant une aptitude à corriger, au plus, un nombre maximal de séquences effacées, caractérisé en ce que les premiers moyens comprennent des moyens d'adaptation (81, 82, 83) donnant à l'écart prédéterminé une valeur permettant auxdits premiers moyens de générer un nombre de séquences effacées ne dépassant pas ledit nombre maximal.

**8.** Système de transmission selon une des revendications 4 à 7 caractérisé en ce que les seconds moyens comprennent d'autres moyens d'adaptation (47, 85) pour accroître d'une unité ledit nombre maximal.

**9.** Décodeur à multiétages pour décoder des signaux numériques émis selon une modulation codée à multiniveaux selon une partition d'affectations binaires de points d'une constellation, avec au moins un niveau codé par un codage externe en blocs concaténé avec un codage interne, le décodeur comportant:

- des moyens de détection ($40_1$ - $40_m$) pour effectuer, dans chaque étage, une détection pour un niveau de partition,
- des premiers moyens ($45_1$ -$45_M$) de décodage interne pouvant générer des effacements de séquences de bits,
- - des seconds moyens ($44_1$ -$44_{M1}$) de décodage externe pouvant corriger les effacements et des erreurs de séquences de bits,

caractérisé en ce que le décodeur décode des signaux numériques codés par un codage interne en blocs et pour cela le décodeur comprend au moins un étage pour lequel:

- les premiers moyens effectuent un décodage interne en générant des mots-code internes estimés du code interne en blocs et en générant un effacement de tout mot-code interne estimé, chaque fois que sa détermination est ambiguë, une partie information du mot-code interne constituant un symbole externe,
- les seconds moyens corrigeant les effacements de mots-code internes estimés et des erreurs de mots-code internes estimés,
- ledit étage comportant un codeur ($46_1$ -$46_{M1}$) codant les sorties desdits seconds moyens pour valider les moyens de détection de l'étage suivant.

**10.** Récepteur comportant un décodeur à multiétages pour décoder des signaux numériques émis selon une modulation codée à multiniveaux selon une partition d'affectations binaires de points d'une constellation, avec au moins un niveau codé par un codage externe en blocs concaténé avec un codage interne, le décodeur comportant:

- des moyens de détection ($40_1$ - $40_m$) pour effectuer, dans chaque étage, une détection pour un niveau de partition,
- des premiers moyens ($45_1$ -$45_M$) de décodage interne pouvant générer des effacements de séquences de bits,
- des seconds moyens ($44_1$ -$44_{M1}$) de décodage externe pouvant corriger les effacements et des erreurs de séquences de bits,

caractérisé en ce que le décodeur décode des signaux numériques codés par un codage interne en blocs et pour cela le décodeur comprend au moins un étage pour lequel:

- les premiers moyens effectuent un décodage interne en générant des mots-code internes estimés du code interne en blocs et en générant un effacement de tout mot-code interne estimé, chaque fois que sa détermination est ambiguë, une partie information du mot-code interne constituant un symbole externe,
- les seconds moyens corrigeant les effacements de mots-code internes estimés et des erreurs de mots-code internes estimés,
- ledit étage comportant un codeur ($46_1$ -$46_{M1}$) codant les sorties desdits seconds moyens pour valider les moyens de détection de l'étage suivant.

# EP 0 529 718 B1

**Patentansprüche**

1. Mehrstufen-Übertragungssystem mit einem Sender zum Übertragen digitaler Signale durch mehrpegelcodierte Modulation entsprechend einer Bitstellenaufteilung von Punkten einer Konstellation, wobei wenigstens ein Pegel über eine externe Blockcodierung mit einer inneren Codierung verkettet ist, wobei das genannte System einen Mehrstufen-Empfänger aufweist, der einen Decoder aufweist, der mit den nachfolgenden Elementen versehen ist:

   - Detektionsmitteln $(40_1 - 40_m)$ zum Durchführen einer Detektion eines Teilungspegels in jeder Stufe,
   - ersten inneren Decodierungsmitteln $(45_1 - 45_m)$, die imstande sind Bitfolgenlösungen zu erzeugen,
   - zweiten externen Decodierungsmitteln $(44_1 - 44_{M1})$, die imstande sind, die Bitlöschungen und Bitfolgefehler zu korrigieren, <u>dadurch gekennzeichnet</u>, daß der Sender interne Blockcodierung benutzt, wobei der Decoder wenigstens eine Stufe aufweist, für die:

      - die ersten Mittel eine interne Codierung schaffen durch die Erzeugung der geschätzten inneren Codewörter des internen Blockcodes und durch Erzeugung einer Effizienz aller geschätzten inneren Codewörter, wobei jeweils, wenn die Determinierung zweideutig ist, eine Menge Information des internen Codewortes ein externes Symbol bildet,
      - die zweiten Mittel die Effizienz der geschätzten inneren Codewörter und Fehler der inneren geschätzten Codewörter korrigieren,
      - die genannte Stufe einen Coder $(46_1 - 46_{M1})$ aufweist, der die Ausgangssignale der genannten zweiten Mittel codiert zur Gültigmachung der Detektionsmittel der nächsten Stufe.

2. Übertragungssystem nach Anspruch 1, <u>dadurch gekennzeichnet</u>, daß die internen Decodierungsmittel eine Decodierung mit maximaler Wahrscheinlichkeit der internen Codewörter mit einer festen Anzahl geschätzter Bits schaffen, wobei eine Löschung aller externen Codewortsymbole stattfindet, wenn die Determinierung wenigstens eines Bits des internen Codewortes unsicher ist.

3. Übertragungssystem nach einem der Ansprüche 1 oder 2, <u>dadurch gekennzeichnet</u>, daß für jede Stufe die Detektionsmittel für jeden empfangenen Punkt PR

   - ein Abstandspaar (D1, D2) zwischen dem genannten empfangenen Punkt PR und den beiden nächsten Punkten PT1, PT2 bestimmen, die einen Teil der Unterzusammensetzung des Teilungspegels der genannten Stufe bildet,
   - sowie eine Folge von Bit-Paaren $b^p{}_1$, $b^p{}_2$ derselben Signifikanz p wie die Bit-Zuordnungen der betreffenden Punkte PT1 und PT2.

4. Übertragungssystem nach Anspruch 3, wobei die interne Codierung durch ein Gitter dargestellt wird, wobei die Punkte der Konstellation in dem Gittercode durch Knotenpunkte voneinander getrennt sind, <u>dadurch gekennzeichnet</u>, daß die ersten internen Decodierungsmittel:

   - für jeden Knotenpunkt des Gitters akkumulierte Abstände (D1, D2) auf den möglichen Strecken des Gitters, verteilt über die vorher decodierten Punkte, berechnen,
   - eine Strecke mit den niedrigsten genannten Akkumulierungen bestimmen,
   - dem Bit $b^p$, entsprechend dem genannten Knotenpunkt, dasselbe Bit der Signifikanz p zuordnen wie die von $b^p{}_1$ oder $b^p{}_2$ der Bitzuordnung des Punktes PT1 oder PT2 des letzten Abstandes (D1, D2) der Akkumulation, und daß sie, wenn zwei Akkumulationen für denselben Knotenpunkt nur durch einen Anstand kleiner als ein vorbestimmter kleiner Abstand getrennt werden, das interne Codewortgebilde in den Löschzustand stellen.

5. Übertragungssystem nach einem der Ansprüche 1 bis 4, <u>dadurch gekennzeichnet</u>, daß es weiterhin wenigstens eine Stufe mit den genannten Detektionsmitteln $(40_M)$ und mit den Mitteln $(45_M)$ aufweist, die durch Erzeugung geschätzter interner Codewörter eine interne Decodierung herbeiführen.

6. Übertragungssystem nach einem der Ansprüche 1 bis 5, <u>dadurch gekennzeichnet</u>, daß es weiterhin wenigstens eine Stufe mit den genannten Detektionsmitteln $(40_m)$ aufweist, die eine Detektion nicht-codierter empfangener Punkte PR herbeiführen.

7. Übertragungssystem nach einem der Ansprüche 4 bis 6, wobei die genannten zweiten Mittel eine Korrekturkapazität haben entsprechend der maximalen Anzahl gelöschter Folgen, <u>dadurch gekennzeichnet</u>, daß die ersten Mittel Anpassungsmittel (81, 82, 83) aufweisen, die dem vorbestimmten Abstand einen Wert geben, wodurch die genannten ersten Mittel eine Anzahl gelöschter Folgen erzeugen können, welche die genannte maximale Anzahl nicht übersteigt.

8. Übertragungssystem nach einem der Ansprüche 4 bis 7, dadurch gekennzeichnet, daß die zweiten Mittel weitere Anpassungsmittel (47, 85) aufweisen zur Steigerung der genannten maximalen Anzahl um eine Einheit.

9. Mehrstufendecoder zum Decodieren digitaler Signale, die entsprechend einer Mehrpegelcodemodulation mit einer Bitzuordnung übertragen worden sind, welche Punkte einer Konstellation aufteilen mit wenigstens einem Pegel, codiert über eine externe Block-Codierung, aneinandergekoppelt mit einer internen Codierung, wobei dieser Decoder die nachfolgenden Elemente aufweist:

   - Detektionsmittel ($40_1$ - $40_m$) zum Durchführen einer Detektion eines Teilungspegels in jeder Stufe,
   - erste innere Decodierungsmittel ($45_1$ - $45_m$), die imstande sind Bitfolgenlöschungen zu erzeugen,
   - zweite externe Decodierungsmittel ($44_1$ - $44_{m1}$), die imstande sind, die Bitlöschungen und Bitfolgefehler zu korrigieren, dadurch gekennzeichnet, daß der decoder digitale Signale decodiert, die über eine interne Blockcodierung codiert worden sind, wozu der Decoder wenigstens eine Stufe aufweist, für die:

      - die ersten Mittel eine interne Decodierung durchführen durch Erzeugung geschätzter interner Codewörter des internen Blockcodes und durch Erzeugung einer Löschung aller geschätzten inneren Codewörter, wobei jeweils, wenn die Determinierung zweideutig ist, eine Menge Information des internen Codewortes ein externes Symbol bildet,
      - die zweiten Mittel die Löschung der geschätzten inneren Codewörter und Fehler der inneren geschätzten Codewörter korrigieren,
      - die genannte Stufe einen Coder ($46_1$ - $46_{M1}$) aufweist, der die Ausgangssignale der genannten zweiten Mittel codiert zur Gültigmachung der Detektionsmittel der nächsten Stufe.

10. Empfänger mit einem Mehrstufen-Decoder zum Decodieren digitaler Signale, die nach einer codierten Mehrpegelmodulation übertragen worden sind mit einer Bitzuordnungsteilung von Punkten einer Konstellation, mit mindestens einem durch eine mit einer internen Codierung aneinandergekoppelte externe Blockcodierung codierten Pegel, wobei dieser Decoder mit den nachfolgenden Elementen versehen ist:

   - Detektionsmitteln ($40_1$ - $40_m$) zum Durchführen einer Detektion eines Teilungspegels in jeder Stufe,
   - ersten inneren Decodierungsmitteln ($45_1$ - $45_m$), die imstande sind Bitfolgenlöschungen zu erzeugen,
   - zweiten externen Decodierungsmitteln ($44_1$ - $44_{M1}$), die imstande sind, die Bitlöschungen und Bitfolgefehler zu korrigieren, dadurch gekennzeichnet, daß der Decoder durch eine interne Blockcodierung codierte digitale Signale decodiert und daß er dazu wenigstens eine Stufe aufweist, für die:

      - die ersten Mittel eine interne Codierung schaffen durch die Erzeugung der geschätzten inneren Codewörter des internen Blockcodes und durch Erzeugung einer Löschung aller geschätzten inneren Codewörter, wobei jeweils, wenn die Determinierung zweideutig ist, eine Menge Information des internen Codewortes ein externes Symbol bildet,
      - die zweiten Mittel die Löschung der geschätzten inneren Codewörter und Fehler der inneren geschätzten Codewörter korrigieren,
      - die genannte Stufe einen Coder ($46_1$ - $46_{M1}$) aufweist, der die Ausgangssignale der genannten zweiten Mittel codiert zur Gültigmachung der Detektionsmittel der nächsten Stufe.

## Claims

1. A multistage transmission system comprising a transmitter for transmitting digital signals by multilevel coded modulation in accordance with a bit allocation partitioning of points of a constellation, having at least a level coded via an external block coding concatenated with an inner coding, said system comprising a multistage receiver which has a decoder provided with:

   - detecting means ($40_1$ - $40_m$) for performing a detection of a partitioning level in each stage,
   - first internal decoding means ($45_1$ - $45_m$) capable of generating bit sequence erasures,
   - second external decoding means ($44_1$ - $44_{M1}$) capable of correcting the bit erasures and bit sequence errors, characterized in that the transmitter uses inner block coding, the decoder comprising at least a stage for which:

- the first means perform an internal decoding by generating estimate inner code words of the inner block code and by generating an efficiency of all the estimate inner code words each time its determination is ambiguous, an information component of the inner code word constituting an external symbol;
- the second means correcting the efficiency of estimate inner code words and errors of estimate inner code words,
- said stage comprising a coder ($46_1$ - $46_{M1}$) encoding the output signals of said second means for validating the detection means of the next stage.

2. A transmission system as claimed in Claim 1, characterized in that the internal decoding means effect a maximum likelihood decoding of the inner code words having a fixed number of estimated bits, the erasure of each external symbol being effected when the determination of at least one bit of the inner code word is uncertain.

3. A transmission system as claimed in one of the Claims 1 or 2, characterized in that for each stage, the detection means determine, for each received point PR :

- a pair of distances (D1, D2) between the said received point PR and two nearest points PT1, PT2 forming part of the sub-assembly having the partition level of the said stage,
- and a series of binary pairs $b^p_1$, $b^p_2$ of the same significance as the bit assignments of the respective points PT1 and PT2.

4. A transmission system as claimed in Claim 3, the internal coding being represented by a trellis, the points of the constellation being, in the trellis code, separated from each other by junction points, characterized in that the first internal decoding means:

- calculate for each junction point of the trellis, accumulated distances (D1, D2) on the possible paths of the trellis distributed over the preceding decoded points,
- determine a path having the lowest said accumulations,
- assign to the bit $b^p$, corresponding to the said junction point, the same bit of significance p as that of $b^p_1$ or $b^p_2$ of the bit assignment of the point PT1 or PT2 of the last distance (D1, D2) of the accumulations, and when two accumulations for the same junction point are only separated by a distance less than a predetermined small distance, the said means adjust the whole inner code word to the erasure state.

5. A transmission system as claimed in any one of the Claims 1 to 4, characterized in that it moreover includes at least one stage provided with the said detection means ($40_M$) and means ($45_M$) which effect an internal decoding by generating estimated inner code words.

6. A transmission system as claimed in any one of Claims 1 to 5, characterized in that it furthermore includes at least one stage provided with said detection means ($40_m$) which effect a detection of non-coded received points PR.

7. A transmission system as claimed in any one of the Claims 4 to 6, the said second means having a capacity of correcting, at the utmost, a maximum number of erased sequences, characterized in that the first means comprise adaptation means (81, 82, 83) giving the predetermined distance a value allowing said first means to generate a number of erased sequences not exceeding the said maximum number.

8. A transmission system as claimed in any one of the Claims 4 to 7, characterized in that the second means comprise further adaptation means (47, 85) for increasing the said maximum number by one unit.

9. A multistage decoder for decoding digital signals transmitted in accordance with a multilevel code modulation with a bit allocation partitioning of points of a constellation, having at least a level coded via an external block coding concatenated with an inner coding, said decoder comprising:

- detecting means ($40_1$ - $40_m$) for performing a detection of a partitioning level in each stage,
- first internal decoding means ($45_1$ - $45_m$) capable of generating bit sequence erasures,
- second external decoding means ($44_1$ - $44_{m1}$) capable of correcting the bit erasures and bit sequence errors, characterized in that the decoder decodes digital signals coded via inner block coding and, therefore, the decoder comprises at least a stage for which:
- the first means perform an internal decoding by generating estimate inner code words of the inner block code and by generating an efficiency of all the estimate inner code words each time its determination is ambiguous, an information component of the inner code word constituting an external symbol;

- the second means correcting the efficiency of estimate inner code words and errors of estimate inner code words,
- said stage comprising a coder ($46_1$ - $46_{M1}$) encoding the output signals of said second means for validating the detection means of the next stage.

10. A receiver comprising a multistage decoder for decoding digital signals transmitted in accordance with a multilevel code modulation with a bit allocation partitioning of points of a constellation, having at least a level coded via an external block coding concatenated with an inner coding, said decoder comprising:

- detecting means ($40_1$ - $40_m$) for performing a detection of a partitioning level in each stage,
- first internal decoding means ($45_1$ - $45_m$) capable of generating bit sequence erasures,
- second external decoding means ($44_1$ - $44_{M1}$) capable of correcting the bit erasures and bit sequence errors, characterized in that the decoder decodes digital signals coded via inner block coding and, therefore, the decoder comprises at least a stage for which:
- the first means perform an internal decoding by generating estimate inner code words of the inner block code and by generating an efficiency of all the estimate inner code words each time its determination is ambiguous, an information component of the inner code word constituting an external symbol;
- the second means correcting the efficiency of estimate inner code words and errors of estimate inner code words,
- said stage comprising a coder ($46_1$ - $46_{M1}$) encoding the output signals of said second means for validating the detection means of the next stage.

FIG. 1

A

B

FIG. 5

FIG. 2

FIG. 3

EP 0 529 718 B1

FIG. 4

FIG.6

FIG. 7

FIG. 8

FIG. 9

FIG. 10